(19) Europäisches Patentamt
European Patent Office
Office européen des brevets

(11) **EP 2 559 318 B1**

(12) **FASCICULE DE BREVET EUROPEEN**

(45) Date de publication et mention de la délivrance du brevet:
**16.03.2016 Bulletin 2016/11**

(21) Numéro de dépôt: **11715970.7**

(22) Date de dépôt: **22.03.2011**

(51) Int Cl.:
**H05B 3/36** *(2006.01)*  **F17D 1/18** *(2006.01)*

(86) Numéro de dépôt international:
**PCT/FR2011/050603**

(87) Numéro de publication internationale:
**WO 2011/128546 (20.10.2011 Gazette 2011/42)**

(54) **COUVERTURE CHAUFFANTE POUR DISPOSITIF DE TRANSPORT D'UN FLUIDE COMPRENANT UN HYDROCARBURE**

HEIZHAUBE FÜR EINE VORRICHTUNG ZUM TRANSPORT EINER KOHLENWASSERSTOFFHALTIGEN FLÜSSIGKEIT

HEATING COVER FOR A DEVICE FOR TRANSPORTING A FLUID CONTAINING A HYDROCARBON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2010 FR 1052844**

(43) Date de publication de la demande:
**20.02.2013 Bulletin 2013/08**

(73) Titulaire: **Total S.A.**
**92400 Courbevoie (FR)**

(72) Inventeurs:
• **BIGEX, Thibaud**
**F-64018 Pau Cedex (FR)**
• **WOIRIN, Jérôme**
**F-64018 Pau Cedex (FR)**

(74) Mandataire: **Cabinet Plasseraud**
**66, rue de la Chaussée d'Antin**
**75440 Paris Cedex 09 (FR)**

(56) Documents cités:
**EP-A2- 1 367 859      WO-A1-97/40309**
**CN-Y- 2 436 761       CN-Y- 2 475 967**
**CN-Y- 2 800 021       CN-Y- 201 191 920**
**CN-Y- 201 354 918**

**Description**

La présente invention est relative à une couverture chauffante pour dispositif de transport d'un fluide comprenant un hydrocarbure.

Les dispositifs de transport d'hydrocarbure sont parfois installés dans des environnements très froids, à terre comme en mer, et parfois en mer à de très grande profondeur. Dans ces conditions le fluide peut soit se congeler, soit se coaguler, soit présenter la formation de paraffine. Ces transformations du fluide peuvent générer des bouchons et entraver le transport du fluide dans le dispositif de transport, telle qu'un pipeline, une conduite ou une vanne. C'est pourquoi ces dispositifs de transport de fluide d'hydrocarbures sont parfois chauffés pour éviter ces inconvénients.

Des couvertures chauffantes existent pour des pipeline ou conduites d'hydrocarbures. Elles sont habituellement enroulées autour de la conduite, et plusieurs sangles permettent de la maintenir contre la conduite. Le document US 2006/102615 décrit une telle couverture chauffante.

Cependant ces couvertures sont assez peu efficaces, s'usent et comportent des éléments chauffants sont la forme de lignes conductrices en cuivre qui se rompent assez facilement lorsque la couverture chauffante est manipulée.

La présente invention a pour but de perfectionner ces couvertures.

Les documents EP 1 367 859, WO 97/40309, CN 201 354 918 Y, CN 2 436 761 Y, CN 2 800 021 Y, CN 2 475 967 Y et CN 201 191 920 Y décrivent également des couvertures chauffantes ou pipe-line chauffants.

Une couverture chauffante pour dispositif de transport d'un fluide comprenant un hydrocarbure selon un mode de réalisation de l'invention s'étend selon une surface et comprend une première face destinée à être sensiblement en contact avec le dispositif de transport et une deuxième face opposée à la première face, ladite couverture chauffante comprenant dans une direction transversale à la surface depuis la première face :

- une première couche d'isolation électrique,
- une couche de chauffage sur la première couche d'isolation électrique, ladite couche de chauffage comprenant des fibres de carbone noyées dans un élastomère,
- une deuxième couche d'isolation électrique sur la couche de chauffage, lesdites première et deuxième couches d'isolation électrique recouvrant la couche de chauffage pour isoler électriquement ladite couche de chauffage,
- une couche d'isolation thermique sur la deuxième couche d'isolation électrique adaptée pour isoler thermiquement la deuxième couche d'isolation électrique, et
- des moyens d'alimentation électrique destinés à amener un courant électrique à ladite couche de chauffage, ledit courant électrique circulant dans ladite couche de chauffage pour chauffer ladite couche de chauffage, et

dans laquelle la couche d'isolation thermique comprend une membrane formant une poche étanche avec une cavité interne à ladite poche, ladite cavité interne étant remplie d'un fluide d'isolation thermique.

Grâce à ces dispositions, la couverture chauffante chauffe de manière plus efficace et de manière plus homogène.

En outre, la couverture chauffante est plus souple, s'use moins et une détérioration localisée ne coupe pas la conduction électrique et le chauffage de la couverture, de sorte qu'une telle couverture de chauffage est plus robuste à tout incident.

Dans divers modes de réalisation de la couverture chauffante selon l'invention, on peut éventuellement avoir recours en outre à l'une et/ou à l'autre des dispositions suivantes

- le fluide d'isolation thermique est un gel visqueux ;
- les première et deuxième couches d'isolation électrique comprennent des fibres de verre ou de kevlar noyées dans un élastomère ;

- les première et deuxième couches d'isolation électrique et la couche de chauffage comprennent un même élastomère ;
- l'élastomère est une silicone ;
- la couverture comprend en outre :
- une première couche de revêtement sous la première couche d'isolation électrique, et
- une deuxième couche de revêtement entre la deuxième couche d'isolation électrique et la couche d'isolation thermique, lesdites première et deuxième couches de revêtement recouvrant lesdites couches d'isolation électriques pour être étanche à un fluide ;
- les première et deuxième couches de revêtement comprennent un élastomère, et de préférence une silicone ;
- les première et deuxième couches de revêtement ont une épaisseur supérieure à 0,5 mm, et de préférence supérieure à 2 mm ;
- la couverture comprend en outre des éléments magnétiques adaptés pour que la couverture chauffante puisse être attirée par attraction magnétique par le dispositif de transport ;
- les éléments magnétiques sont des particules magnétique d'une dimension inférieure à 0,2 mm noyées dans l'élastomère ;
- les particules magnétiques sont constituées d'un matériau choisi parmi le ferrite, le néodyme-fer-bore, l'Alnico, le Samarium-cobalt ;
- la surface comprend au moins :
- une portion centrale destinée à venir sur une partie supérieure du dispositif de transport, et
- des portions de rabat autour de la portion centrale, les portions de rabat étant destinées à venir sensiblement sur une partie de côté du dispositif de transport et à venir se rejoindre latéralement deux à deux pour sensiblement envelopper ledit dispositif de transport.

D'autres caractéristiques et avantages de l'invention apparaîtront au cours de la description suivante de deux de ses modes de réalisation, donnés à titre d'exemples non limitatif, en regard des dessins joints.

Sur les dessins :

- la figure 1 est une vue en coupe d'un premier mode de réalisation de la couverture chauffante,
- la figure 2 est une vue en perspective d'une couverture chauffante ayant une première forme,
- la figure 3 est une vue en coupe montrant une première utilisation de la couverture chauffante, ladite utilisation pouvant correspondre à la couverture chauffante de la figure 2,
- la figure 4 est une vue en perspective d'une couverture chauffante ayant une deuxième forme,
- la figure 5 est une vue en perspective montrant une deuxième utilisation de la couverture chauffante, ladite utilisation pouvant correspondre à la couverture chauffante de la figure 4,
- la figure 6 est une vue en coupe d'un deuxième mode de réalisation de la couverture chauffante.

Sur les différentes figures, les mêmes références désignent des éléments identiques ou similaires.

La direction longitudinale mentionnée dans cette description doit s'entendre comme la direction allant dans la direction X désignée sur les figures. Une direction transversale mentionnée dans cette description doit s'entendre comme la direction Y ou Z désignée sur les figures. Ces directions ne sont mentionnées que pour aider la lecture et la compréhension de l'invention. La surface S représentée s'étend selon un plan XY par simplification de représentation, mais cette surface peut s'étendre selon toute direction. En outre, elle peut ne pas être plane.

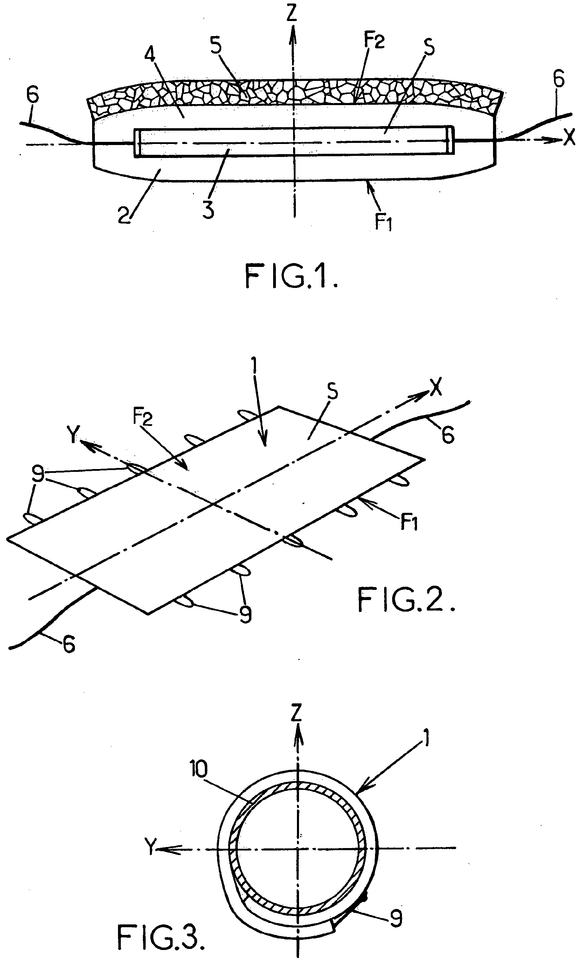

La figure 1 est une vue en coupe transversale d'un premier mode de réalisation d'une couverture chauffante 1 pour un dispositif de transport d'un fluide comprenant un hydrocarbure, tel qu'un pétrole brut, un gaz, une huile lourde, ou autre.

Cette couverture chauffante s'étend selon une surface S, montrée en figure 2 dans un plan XY. La couverture chauffante comprend une première face F1, pouvant également être appelée par le terme de « face inférieure », et une deuxième face F2 opposée à la première face, ladite deuxième face F2 pouvant également être appelée par le terme de « face supérieure ».

Dans la coupe présentée en figure 1, la couverture chauffante comprend dans une direction transversale à la surface S (direction Z ici) depuis la première face F1 et en direction de la deuxième face F2 :

- une première couche d'isolation électrique 2,
- une couche de chauffage 3 sur la première couche d'isolation électrique 2,
- une deuxième couche d'isolation électrique 4 sur la couche de chauffage 3,
- une couche d'isolation thermique 5 sur la deuxième couche d'isolation électrique 4, et
- des moyens d'alimentation électriques 6 de la couche de chauffage 3.

La couche de chauffage 3 est composée notamment de fibres de carbone noyées dans un élastomère. Les fibres de carbones peuvent être unidirectionnelle, par exemple toutes alignées dans la direction X, ou multidirectionnelles. Alternativement, les fibres de carbone sont agencées selon un tissu maillé, le tissu ayant fibres de carbones selon deux directions ou des fibres de carbone selon une première direction et d'autres fibres selon une deuxième direction.

L'élastomère permet de maintenir les fibres et d'obtenir une couche de chauffage suffisamment élastique pour que la couverture chauffante soit souple. Cet élastomère sera avantageusement une silicone.

Les fibres de carbone sont conductrice de l'électricité, et aptes à chauffer par effet Joule, c'est-à-dire grâce à la résistance électrique des fibres de carbone, lorsqu'un courant électrique les parcourt.

La résistance électrique $R$ d'une telle couche de chauffage 3 entre les première et deuxième extrémités (a, 1b) de la conduite peut être calculée de manière approchée par la formule suivante :

$$R = \rho_{fibre} \cdot \frac{L_3}{S_3}$$

dans laquelle :

- $\rho_{fibre}$ est une résistivité des fibres de carbone, ayant par exemple pour valeur $\rho_{fibre} = 1,9 \cdot 10^{-5}\,\Omega.m$ à une température de 20 °C, ce qui est sensiblement 1100 fois plus résistif que le cuivre à 20°C,
- $L_3$ est une longueur de la couche de chauffage 3 selon la direction longitudinale X,
- S3 est une section transversale de la couche de chauffage 3, avec $S_3 = L_t \cdot E_p$
- $E_p$ est une épaisseur de la couche de chauffage dans une direction transversale, telle que la direction Z, et
- $L_t$ est une largeur de la couche de chauffage dans une autre direction transversale, telle que la direction Y.

La puissance électrique $P$ consommée servant à chauffer le dispositif de transport 10 est égale à $P = V^2/R$, où $V$ est une tension électrique d'alimentation de ladite couche de chauffage 3.

La couche de chauffage 3 est dimensionnée en fonction de la puissance électrique nécessaire. Par exemple elle peut avoir une épaisseur comprise entre 0,5 mm et 20 mm, et de préférence comprise entre 1 mm et 10 mm, et par exemple de 5 mm.

Les première et deuxième couches d'isolation électrique 2, 4 recouvrent entièrement la couche de chauffage 3, de sorte que la couche de chauffage 3 se trouve à l'intérieur de ces couches d'isolation électrique. La couche de chauffage 3 est ainsi correctement isolée électriquement de l'environnement extérieur.

Les couches d'isolation électrique 2, 4 sont constituée d'un élastomère, et avantageusement d'une silicone.

En variante, ces couches d'isolation électrique 2, 4 comprennent également des fibres de verre ou des fibres de kevlar, de sorte que l'isolation électrique de ces couches est améliorée.

Les première et deuxième couches d'isolation électrique 2, 4 et la couche de chauffage 3 peuvent avoir le même élastomère, ce qui simplifie le procédé de fabrication de ces couches et favorise l'adhérence entre ces couches de sorte qu'elles forment une seule pièce continue.

En outre, grâce à l'élastomère dans ces couches de la couverture chauffante 1, celle-ci est souple et facilement mise en oeuvre avec un maximum de surface de contact avec le dispositif de transport pour le chauffer efficacement.

Les première et deuxième couches d'isolation électrique 2, 4 sont dimensionnées en fonction de l'isolation électrique nécessaire, c'est-à-dire de la tension d'alimentation *V*. Par exemple, elles peuvent avoir une épaisseur comprise entre 0,1 mm et 10 mm, et de préférence comprise entre 1 mm et 5 mm.

La couche d'isolation thermique 5 est adaptée pour isoler thermiquement la deuxième couche d'isolation électrique 4. Cette couche d'isolation thermique 5 isole thermiquement la deuxième face F2 de la couverture chauffante 1. La chaleur générée par la couche de chauffage 3 n'est pas perdue par cette deuxième face F2. Elle est concentrée vers la première couche d'isolation électrique 2 et la première face F1 de la couverture chauffante 1 en contact avec le dispositif de transport d'un fluide d'hydrocarbure. Plus généralement, la couche d'isolation thermique 5 isole thermiquement la couverture chauffante 1 de l'environnement extérieur. La couverture chauffante 1 est alors efficace pour chauffer le dispositif de transport.

Selon une première variante, la couche d'isolation thermique 5 comprend au moins un matériau polyuréthane (PU).

Selon une deuxième variante, la couche d'isolation thermique 5 comprend une membrane formant une poche étanche avec une cavité interne qui est fermée, ladite poche ayant au moins une face en contact avec la deuxième couche d'isolation électrique 5 de la couverture chauffante 1, de sorte que ladite deuxième couche d'isolation électrique 4 est isolée thermiquement de l'environnement extérieur.

De plus, la cavité interne est remplie d'un fluide d'isolation thermique. Le fluide d'isolation thermique est un matériau à forte isolation thermique, tel qu'un gel visqueux.

Grâce à cette variante, la couche d'isolation thermique est très efficace et très souple, de sorte que la couverture chauffante 1 est également efficace et très souple et facile à mettre en oeuvre sur le dispositif de transport.

Les moyens d'alimentation électrique 6 permettent d'amener, depuis l'extérieur à la couverture chauffante 1, un courant électrique à la couche de chauffage 3. Lorsque ce courant électrique circule dans la couche de chauffage, celle-ci s'échauffe. La chaleur générée est transmise par conduction au dispositif de transport par le contact avec la première face F1 de la couverture chauffante 1.

Tel que représenté en figure 1, les moyens d'alimentation électrique 6 peuvent comprendre deux câbles d'alimentation, chaque câble étant connecté à une extrémité de la couche de chauffage 3 dans la direction longitudinale X, par exemple, par une jonction transversale à cette direction longitudinale X, de sorte à être connecté électriquement à une grande quantité d'extrémités des fibres de carbone de ladite couche de chauffage 3. Ces fibres de carbones sont alors alimentées en parallèle par lesdites jonctions d'extrémité. La couche de chauffage 3 est alimentée par les deux câbles, soumis à la tension d'alimentation *V*.

La couverture chauffante 1 peut avoir de très nombreuses formes de sa surface S, chacune étant sensiblement adaptée à l'application de ladite couverture chauffante.

Selon une première variante de forme de la surface S de la couverture chauffante 1, représentée en figure 2, celle-ci s'étend selon une surface S sensiblement rectangulaire. Elle peut avoir par exemple selon deux bords de ladite couverture chauffante 1 des moyens d'accrochages 9 adaptés pour fixer lesdits bords l'un avec l'autre, ou avec d'autre moyens d'accrochages montés sur la surface de la couverture chauffante 1 ou sur le dispositif de transport 10 à réchauffer.

Une telle couverture chauffante 1 peut alors être utilisé comme représenté en coupe transversale de la figure 3, dans laquelle le dispositif de transport 10 d'hydrocarbure est une canalisation ou pipeline sensiblement cylindrique, et la couverture chauffante 1 est enroulée autour de cette canalisation avec la première couche d'isolation électrique 2 ou la première face F1 en contact avec ladite canalisation 10, et la couche d'isolation thermique 5 ou la deuxième face F2 radialement à l'extérieur par rapport à la canalisation 10, pour concentrer et conserver la chaleur générée par la couverture chauffante vers la canalisation 10. En outre, l'enroulement de la couverture chauffante 1 peut présenter une zone de recouvrement pour éviter au maximum les pertes thermiques.

Grâce à cette première forme, le dispositif de transport 10 est enveloppé dans la couverture chauffante 1. Il est chauffé par la couverture chauffante 1 et les inconvénients du au froid cités en introduction sont évités ou résolus. Ensuite, la couverture chauffante 1 peut être laissée sur la conduite ou retirée pour être réutilisée ailleurs ou ultérieurement.

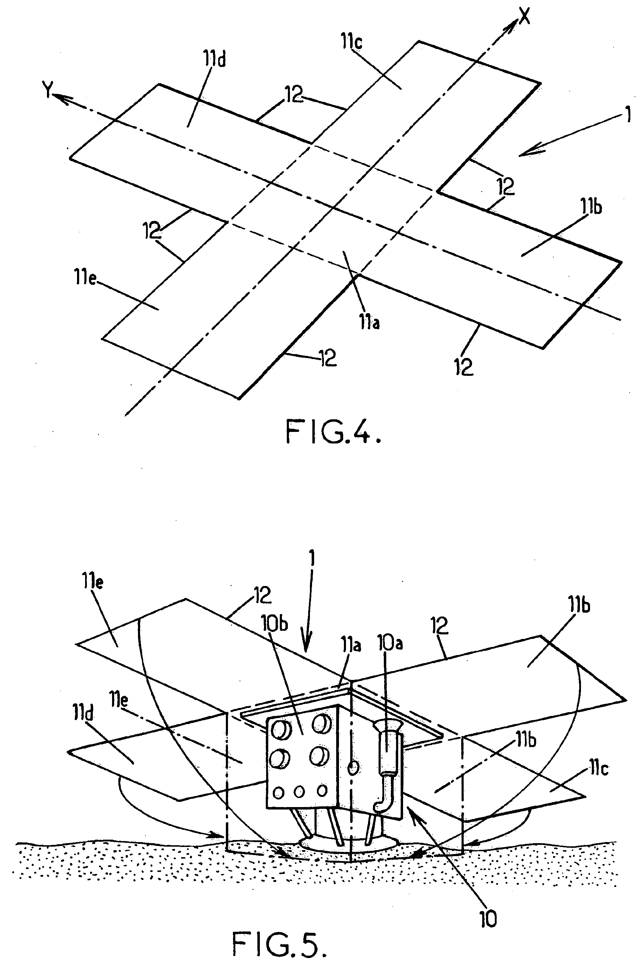

Selon une deuxième variante de forme de la surface S de la couverture chauffante 1, représentée en figure 4, celle-ci a une portion centrale 11a et des portions de rabat 11b, 11c, 11d, 11e situées autour de la portion centrale 11a.

Une telle couverture chauffante 1 peut alors être utilisée comme représenté en figure 5, dans laquelle figure un dispositif de transport 10 d'hydrocarbure appelé un « Christmas tree » comprenant des organes tels que des vannes et accessoires, et un panneau de commande 10a pour piloter lesdites vannes ou accessoires. Un tel dispositif peut être placé au fond de la mer comme représenté.

La couverture chauffante 1 de la figure 4 peut être installée pour réchauffer ce dispositif de transport 10 de la manière suivante : La portion centrale 11a de la couverture chauffante 1 est placée sur une partie supérieure du dispositif de transport 10, les portions de rabat 10b, 10c, 10d, 10e sont chacune rabattue verticalement tel que représenté par les flèches en figure 4 pour chacun venir sur une partie de côté du dispositif de transport, et chaque portion de rabat rejoint latéralement une autre portion de rabat pour envelopper le dispositif de transport 10 par un bord 12 de ladite portion de rabat.

Comme pour la première variante de forme de la couverture chauffante, la première face F1 est sensiblement en contact ou à proximité du dispositif de transport 10, et la deuxième face F2 sur laquelle est la couche d'isolation thermique 5, est orientée vers l'extérieur.

Grâce à cette deuxième forme, le dispositif de transport 10 est enveloppé dans un volume sensiblement étanche, par exemple parallélépipédique. Ce volume est chauffé par la couverture chauffante 1 et les inconvénients du au froid cités en introduction sont évités ou résolus. Ensuite, la couverture chauffante peut être laissée ou retirée pour être réutilisée ailleurs ou ultérieurement.

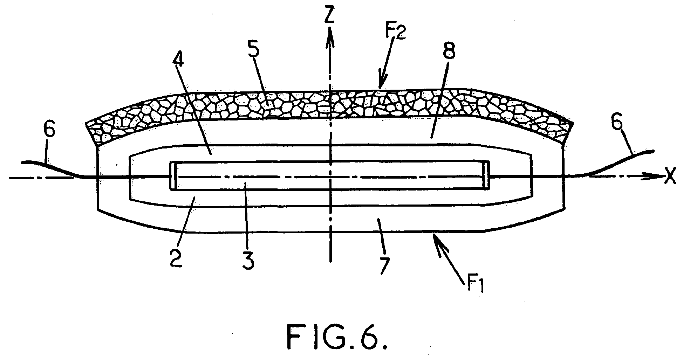

Selon un deuxième mode de réalisation de l'invention représenté en coupe en figure 6, la couverture chauffante 1 comprend dans la direction transversale à la surface S, depuis la première face F1 et en direction de la deuxième face F2 :

- une première couche de revêtement 7,
- une première couche d'isolation électrique 2 sur la première couche de revêtement 7,
- une couche de chauffage 3 sur la première couche d'isolation électrique 2,
- une deuxième couche d'isolation électrique 4 sur la couche de chauffage 3,
- une deuxième couche de revêtement 8 sur la deuxième couche d'isolation électrique 4, et
- une couche d'isolation thermique 5 sur la deuxième couche de revêtement 8.

Ce deuxième mode de réalisation de la couverture chauffante 1 comprend donc deux couches de revêtement additionnelles, la première étant située sous la première couche d'isolation électrique 2 (vers la première face F1) et la deuxième entre la deuxième couche d'isolation électrique 4 et la couche d'isolation thermique 5.

Ces couches de revêtement recouvrent ainsi sensiblement entièrement les couches d'isolation électrique 2, 4, de sorte que les couches d'isolation électrique et la couche de chauffage 3 se trouvent à l'intérieur desdites couches de revêtement.

Grâce à ces couches de revêtement, l'étanchéité de la couverture à un fluide externe peut être améliorée.

Les couches de revêtement 7, 8 peuvent être constituée du même élastomère que les autres couches ou d'un élastomère différent pour améliorer l'étanchéité ou la résistance à l'environnement extérieur (eau ou air). L'élastomère peut être une silicone.

Les première et deuxième couches de revêtement 7, 8 ont une épaisseur supérieure à 0,5 mm, et de préférence supérieure à 2 mm.

La couche d'isolation thermique 5 de ce deuxième mode de réalisation peut être du même type que celui du premier mode de réalisation de l'invention. Notamment, il peut être en polyuréthane ou comprendre une poche remplie de gel isolant thermiquement.

Les moyens d'alimentation électrique 6 peuvent également être identiques à ceux du premier mode de réalisation de l'invention.

Selon des variantes de la couverture chauffante 1, celle-ci peut en outre comprendre des éléments magnétiques adaptés pour que la couverture chauffante 1 soit attirée par attraction magnétique par le dispositif de transport 10, celui-ci comprenant habituellement des matériaux magnétiques, tel que de l'acier ou du fer.

Ces éléments magnétiques peuvent être discrets ou répartis, tel que des particules magnétique d'une dimension inférieure à 0,2 mm noyées dans l'élastomère des couches de la couverture chauffante 1. Selon une variante avantageuse, ces particules magnétique sont contenues dans l'élastomère de la première couche d'isolation électrique 2 dans le cas du premier mode de réalisation, ou dans la première couche de revêtement 7 dans le cas du deuxième mode de réalisation de l'invention.

Les particules magnétiques sont constituées d'un matériau magnétique dur, par exemple choisi parmi le ferrite, le néodyme-fer-bore, l'Alnico, le Samarium-cobalt.

Dans tous les cas, ces éléments magnétiques sont avantageusement placés à proximité de la première face F1, pour être au plus près du dispositif de transport 10 d'hydrocarbure, afin d'appliquer une force d'attraction magnétique suffisante.

Enfin, la couverture chauffante selon l'invention peut être réalisée par tout procédé et notamment par un procédé d'infusion d'élastomère dans un moule, dans lequel une ou plusieurs couches de fibres de verre ou kevlar, superposée d'une ou plusieurs couches de fibres de carbone, elle-même superposée d'une ou plusieurs couches de fibres de verre ou kevlar sont placées dans ledit moule, puis un élastomère est infusé ou injecté dans le moule pour venir remplir tous les interstices entre toutes les fibres et former une matrice commune.

D'autres opérations permettent de réaliser les connexions des moyens d'alimentation 6 et la couche d'isolation thermique 5.

Une telle couverture chauffante 1 peut être fabriquée avec un procédé automatisé, peu coûteux.

La couverture chauffante 1 réalisée est souple et comprend une couche de chauffage en fibres de carbone robuste à tout accident et apte à générer une chaleur bien répartie et homogène.

**Revendications**

1. Couverture chauffante pour dispositif de transport d'un fluide comprenant un hydrocarbure, ladite couverture s'étendant selon une surface (S), comprenant une première face (F1) destinée à être sensiblement en contact avec le dispositif de transport et une deuxième face (F2) opposée à la première face, ladite couverture chauffante comprenant dans une direction transversale à la surface depuis la première face :

   - une première couche d'isolation électrique (2),
   - une couche de chauffage (3) sur la première couche d'isolation électrique, ladite couche de chauffage comprenant des fibres de carbone noyées dans un élastomère,
   - une deuxième couche d'isolation électrique (4) sur la couche de chauffage, lesdites première et deuxième couches d'isolation électrique (2, 4) recouvrant la couche de chauffage (3) pour isoler électriquement ladite couche de chauffage,
   - une couche d'isolation thermique (5) sur la deuxième couche d'isolation électrique adaptée pour isoler thermiquement la deuxième couche d'isolation électrique, et
   - des moyens d'alimentation électrique (6) destinés à amener un courant électrique à ladite couche de chauffage(3), ledit courant électrique circulant dans ladite couche de chauffage pour chauffer ladite couche de chauffage, et **caractérisée en ce que**

   dans laquelle la couche d'isolation thermique comprend une membrane formant une poche étanche avec une cavité interne à ladite poche, ladite cavité interne étant remplie d'un fluide d'isolation thermique.

2. Couverture selon la revendication 1, dans laquelle le fluide d'isolation thermique est un gel visqueux.

3. Couverture selon l'une des revendications précédentes, dans laquelle les première et deuxième couches d'isolation électrique (2, 4) comprennent des fibres de verre ou de kevlar noyées dans un élastomère.

4. Couverture selon l'une des revendications précédentes, dans laquelle les première et deuxième couches d'isolation électrique (2, 4) et la couche de chauffage (3) comprennent un même élastomère.

5. Couverture selon l'une des revendications précédentes, dans laquelle l'élastomère est une silicone.

6. Couverture selon l'une des revendications précédentes, comprenant en outre :

   - une première couche de revêtement (7) sous la première couche d'isolation électrique (2), et
   - une deuxième couche de revêtement (8) entre la deuxième couche d'isolation électrique (4) et la couche d'isolation thermique (5), lesdites première et deuxième couches de revêtement (7, 8) recouvrant lesdites couches d'isolation électriques (2,4) pour être étanche à un fluide.

7. Couverture selon la revendication 6, dans laquelle les première et deuxième couches de revêtement (7, 8) comprennent un élastomère, et de préférence une silicone.

8. Couverture selon la revendication 6 ou la revendication 7, dans laquelle les première et deuxième couches de revêtement ont une épaisseur supérieure à 0,5 mm, et de préférence supérieure à 2 mm.

9. Couverture selon l'une des revendications précédentes, comprenant en outre des éléments magnétiques adaptés pour que la couverture chauffante puisse être attirée par attraction magnétique par le dispositif de transport.

10. Couverture selon la revendication 9, dans laquelle les éléments magnétiques sont des particules magnétique d'une dimension inférieure à 0,2 mm noyées dans l'élastomère.

11. Couverture selon la revendication 9, dans laquelle les particules magnétiques sont constituées d'un matériau choisi parmi le ferrite, le néodyme-fer-bore, l'Alnico, le Samarium-cobalt.

12. Couverture selon l'une des revendications précédentes, dans laquelle la surface comprend au moins :

    - une portion centrale (11a) destinée à venir sur une partie supérieure du dispositif de transport (10), et
    - des portions de rabat (11b, 11c, 11d, 11e) autour de la portion centrale (11a), les portions de rabat étant destinées à venir sensiblement sur une partie de côté du dispositif de transport (10) et à venir se rejoindre latéralement deux à deux pour sensiblement envelopper ledit dispositif de transport.

## Patentansprüche

1. Heizhaube für eine Vorrichtung zum Transport eines kohlenstoffhaltigen Fluids, wobei sich die Heizhaube in einer Fläche (S) erstreckt, eine im Wesentlichen in Kontakt mit der Transportvorrichtung anzuordnende erste Seitenfläche (F1) und eine der ersten Seitenfläche gegenüberliegende zweite Seitenfläche (F2) aufweist, wobei die Heizhaube beginnend an der ersten Seitenfläche und in einer Richtung, die transversal zur Flächenerstreckung des Flächengebildes ist, aufweist:

    - eine erste elektrisch isolierende Schicht (2),
    - eine Heizschicht (3), die über der ersten elektrisch isolierenden Schicht angeordnet ist und in ein Elastomer eingebettete Karbonfasern aufweist,
    - eine zweite elektrisch isolierende Schicht (4) über der Heizschicht, wobei die erste und zweite elektrisch isolierende Schicht (2,4) die Heizschicht (3) bedecken, um die Heizschicht elektrisch zu isolieren,
    - eine thermisch isolierende Schicht (5), die über der zweiten elektrisch isolierenden Schicht angeordnet ist und geeignet ist, die zweite elektrisch isolierende Schicht thermisch zu isolieren, und
    - elektrische Versorgungseinrichtungen (6) zum Einspeisen eines elektrischen Stroms in die Heizschicht (3), wobei der elektrische Strom in der Heizschicht fließt, um die Heizschicht zu erhitzen, und

    **dadurch gekennzeichnet, dass** die thermisch isolierende Schicht eine Membran aufweist, die eine dicht verschlossene Tasche bildet, die in ihrem Inneren einen inneren Hohlraum hat, der mit einem thermischen isolierenden Fluid gefüllt ist.

2. Heizhaube nach Anspruch 1, wobei das thermisch isolierende Fluid ein viskoses Gel ist.

3. Heizhaube nach einem der vorstehenden Ansprüche, wobei die erste und zweite elektrisch isolierende Schicht (2,4) in einem Elastomer eingebettete Glas- oder Kevlarfasern aufweist.

4. Heizhaube nach einem der vorstehenden Ansprüche, wobei die erste und zweite elektrisch isolierende Schicht (2,4) und die Heizschicht ein Elastomer des gleichen Typs aufweisen.

5. Heizhaube nach einem der vorstehenden Ansprüche, wobei das Elastomer ein Silikon ist.

6. Heizhaube nach einem der vorstehenden Ansprüche, ferner mit:

    - einer ersten Mantelschicht (7) unter der ersten elektrisch isolierenden Schicht (2) und
    - einer zweiten Mantelschicht (8) zwischen der zweiten elektrisch isolierenden Schicht (4) und der thermisch isolierenden Schicht (5), wobei die erste und zweite Mantelschicht (7,8) die elektrisch isolierenden Schichten (2,4) bedecken, so dass sie fluiddicht eingeschlossen sind.

7. Heizhaube nach Anspruch 6, wobei die erste und zweite Mantelschicht (7,8) ein Elastomer aufweisen, vorzugsweise ein Silikon.

8. Heizhaube nach Anspruch 6 oder 7, wobei die erste und zweite Mantelschicht eine Dicke von mehr als 0,5mm und vorzugsweise mehr als 2mm haben.

9. Heizhaube nach einem der vorstehenden Ansprüche, ferner mit geeigneten magnetischen Elementen, so dass die Heizhaube mittels magnetischer Anziehung von der Transportvorrichtung angezogen werden kann.

10. Heizhaube nach Anspruch 9, wobei die magnetischen Elemente magnetische Partikel sind, die eine Abmessung von weniger als 0,2mm haben und in dem Elastomer eingebettet sind.

11. Heizhaube nach Anspruch 9, wobei die magnetischen Partikel ein aus der folgenden Gruppe ausgewähltes Material aufweisen: Ferrit, Neodym-Eisen-Bor, Alniko, Samarium-Kobalt.

12. Heizhaube nach einem der vorstehenden Ansprüche, wobei die Fläche mindestens aufweist:

    - einen zentralen Abschnitt (11a), der über einem oberen Teil der Transportvorrichtung (10) anzuordnen ist und
    - den zentralen Abschnitt (11a) umgebende Klappenabschnitte (11b,11c,11d,11e), die im Wesentlichen an einem seitlichen Teil der Transportvorrichtung (10) zur Anordnung kommen und zu zweien sich seitlich treffen, um die Transportvorrichtung im Wesentlichen einzuhüllen.

## Claims

1. Heating cover for a device for transporting a fluid containing a hydrocarbon, said cover extending over a surface (S) and comprising a first face (F1) intended to be substantially in contact with the transportation device and a second face (F2) opposite the first face, said heating cover comprising in a direction transverse to the surface, from the first face:

   - a first electrical insulation layer (2),
   - a heating layer (3) on the first electrical insulation layer, said heating layer comprising carbon fibers embedded in an elastomer,
   - a second electrical insulation layer (4) on the heating layer, said first and second electrical insulation layers (2, 4) covering the heating layer (3) to electrically insulate said heating layer,
   - a heat insulation layer (5) on the second electrical insulation layer, suitable for thermally insulating the second electrical insulation layer, and
   - electrical power supply means (6) intended to bring an electrical current to said heating layer (3), said electrical current flowing in said heating layer in order to heat said heating layer, and **characterized in that**

   the heat insulation layer comprises a membrane forming a fluid-tight pouch with an internal cavity in said pouch, said internal cavity being filled with a heat insulation fluid.

2. Cover according to Claim 1, wherein the heat insulation fluid is a viscous gel.

3. Cover according to any one of the preceding claims, wherein the first and second electrical insulation layers (2, 4) comprise fiberglass or Kevlar fibers embedded in an elastomer.

4. Cover according to any one of the preceding claims, wherein the first and second electrical insulation layers (2, 4) and the heating layer (3) comprise the same elastomer.

5. Cover according to any of the preceding claims, wherein the elastomer is a silicone.

6. Cover according to any one of the preceding claims, further comprising:

   - a first coating layer (7) under the electrical insulation layer (2), and
   - a second coating layer (8) between the second electrical insulation layer (4) and the heat insulation layer (5), said first and second coating layers (7, 8) covering said electrical insulations layers (2, 4) in order to be fluid-tight.

7. Cover according to Claim 6, wherein the first and second coating layers (7, 8) comprise an elastomer, and preferably a silicone.

8. Cover according to Claim 6 or Claim 7, wherein the first and second coating layers have a thickness greater than 0.5 mm, and preferably greater than 2 mm.

9. Cover according to any one of the preceding claims, further comprising magnetic elements enabling the heating cover to be attracted by the transportation device by magnetic attraction.

10. Cover according to Claim 9, wherein the magnetic elements are magnetic particles measuring less than 0.2 mm embedded in the elastomer.

11. Cover according to Claim 9, wherein the magnetic particles are composed of a material selected from among ferrite, neodymium iron boron, alnico, and samarium cobalt.

12. Cover according to any one of the preceding claims, wherein the surface comprises at least:

    - a central portion (11a) intended to come over an upper part of the transportation device (10), and
    - flap portions (11b, 11c, 11d, 11e) around the central portion (11a), the flap portions being intended to substantially come over a side part of the transportation device (10) and come together laterally two by two in order to substantially enclose said transportation device.

FIG.1.

FIG.2.

FIG.3.

FIG.4.

FIG.5.

FIG.6.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006102615 A
- EP 1367859 A
- WO 9740309 A
- CN 201354918 Y
- CN 2436761 Y
- CN 2800021 Y
- CN 2475967 Y
- CN 201191920 Y